# EUROPÄISCHE PATENTANMELDUNG

(11) **EP 4 629 145 A1**
(43) Veröffentlichungstag der Anmeldung: **08.10.2025**
(21) Anmeldenummer: 24168801.9
(22) Anmeldetag: 05.04.2024
(51) Int. Cl.: G06N 20/00, G06N 3/091

(54) **DOMÄNENTRANSFER VON MESSDATEN MIT VERBESSERTER VARIABILITÄT**

(71) Anmelder: Robert Bosch GmbH, 70442 Stuttgart (DE)
(72) Erfinder: Law, Cheuk Yan, 30559 Hannover (DE); Bieshaar, Maarten, 34560 Fritzlar (DE); Menke, Maximilian, 31199 Diekholzen (DE); Ibrahim, Emad Monier Mosaad, 31139 Hildesheim (DE)

(57) **Zusammenfassung**

Verfahren (100) zum Überführen eines Daten-Records (1), der Messdaten repräsentiert, in einen Ziel-Record (5) mit gleichem oder ähnlichem semantischem Inhalt, der einer vorgegebenen Ziel-Domäne oder Ziel-Verteilung (3) angehört, mit den Schritten:
• die Ziel-Domäne oder Ziel-Verteilung (3) wird festgelegt (110);
• anhand des Daten-Records (1) werden ein oder mehrere Anpassungs-Modelle (2*) aus einem vorgegebenen Katalog von Anpassungs-Modellen (2) ausgewählt (120), die jeweils dazu ausgebildet sind, dem Daten-Record (1) einen Stil (3a*) einer Sub-Domäne bzw. Sub-Verteilung (3a) der Ziel-Domäne bzw. Ziel-Verteilung (3) aufzuprägen;
• der Daten-Record (1) wird jedem ausgewählten Anpassungs-Modell (2*) zugeführt (130), so dass jeweils ein Zwischenergebnis (4) in der Sub-Domäne bzw. Sub-Verteilung (3a) der Ziel-Domäne bzw. Ziel-Verteilung (3) entsteht; und
• die Zwischenergebnisse (4) werden zu dem gesuchten Ziel-Record (5) zusammengeführt (140).

## Beschreibung

Die vorliegende Erfindung betrifft das Training und den Test neuronaler Netzwerke für die Verarbeitung von Messdaten.

### Stand der Technik

Für das Training von Machine Learning-Modellen zur Verarbeitung von Messdaten, wie etwa neuronalen Netzwerken, wird eine große Menge von Trainings-Beispielen benötigt. Diese Trainings-Beispiele sollten möglichst der gleichen Domäne und/oder Verteilung angehören, der auch die im Wirkbetrieb des Machine Learning-Modells zu verarbeitenden Messdaten angehören. Innerhalb dieser Domäne bzw. Verteilung hat das Machine Learning-Modell in der Regel eine gute Kraft zur Verallgemeinerung.

In vielen Anwendungen können die benötigten Trainings-Beispiele nicht alle messtechnisch erfasst werden. Wenn beispielsweise zur Sommerzeit ein Objekt-Detektionsalgorithmus zur Erkennung von Fußgängern und anderen Verkehrsteilnehmenden für automatisiertes Fahren zu trainieren ist, kann man nicht immer bis zum nächsten kalten Winter warten, um die Menge der Trainings-Beispiele mit Bildern der entsprechenden Jahreszeit zu vervollständigen. Auch stehen beispielsweise nur wenige Bilder von kritischen Situationen zur Verfügung.

Um die Knappheit an Trainings-Beispielen zu lindern, werden daher beispielsweise synthetisch generierte Daten verwendet. Wenngleich diese heutzutage auch meist schon sehr realistisch sind, so unterscheiden sie sich zumeist aber noch von realen Trainings-Beispielen (bspw. durch vom Menschen nicht unbedingt sichtbare Details). Um diesem Effekt entgegenzuwirken, werden daher beispielsweise synthetisch generierte Daten im Wege des Domänentransfers in die Domäne und/oder Verteilung der später zu nutzenden Messdaten überführt. Diese können dann idealerweise in der gleichen Weise genutzt werden, als wären sie direkt in dieser Domäne und/oder Verteilung messtechnisch erfasst worden.

### Offenbarung der Erfindung

Die Erfindung stellt ein Verfahren zum Überführen eines Daten-Records, der Messdaten repräsentiert, in einen Ziel-Record mit gleichem oder ähnlichem semantischem Inhalt, der einer vorgegebenen Ziel-Domäne oder Ziel-Verteilung angehört, bereit.

Dass der Daten-Record Messdaten repräsentiert, bedeutet in diesem Zusammenhang, dass er einen oder mehrere Werte enthält, die als Werte einer oder mehrerer Messgrößen interpretierbar sind. Diese Werte können beispielsweise tatsächlich messtechnisch erfasst worden sein. Sie können aber auch beispielsweise synthetisch generiert worden sein.

Hierbei ist der Begriff "Record" analog zur Verwendung des englischen Begriffs "record" zu sehen und bezeichnet eine Sammlung von Werten zusammenhängender Messgrößen und anderer Daten, vergleichbar mit dem Inhalt einer Karteikarte. Der intuitivere Begriff "Datensatz" ist im Sprachgebrauch auf dem Fachgebiet des Machine Learnings bereits belegt für eine Menge vieler Records, vergleichbar mit einem mit vielen Karteikarten gefüllten Karteikasten. Messdaten-Records können insbesondere beispielsweise Sensordaten enthalten, die mit Sensoren jedweder Art, wie beispielsweise Messinstrumenten für bestimmte Messgrößen, Kameras, Radar-Sensoren, Lidar-Sensoren oder Ultraschallsensoren, aufgenommen wurden.

Im Rahmen des Verfahrens wird zunächst die Ziel-Domäne oder Ziel-Verteilung festgelegt. Anschließend werden anhand des Daten-Records ein oder mehrere Anpassungs-Modelle aus einem vorgegebenen Katalog von Anpassungs-Modellen ausgewählt. Ein jedes Anpassungs-Modell ist ein beliebiges mathematisches Modell, wie etwa ein Machine Learning-Modell, welches Daten-Records einer beliebigen Quell-Domäne in die Ziel-Domäne überführt. Hier sind die Anpassungs-Modelle konkret jeweils dazu ausgebildet, dem Daten-Record einen Stil einer Sub-Domäne bzw. Sub-Verteilung der Ziel-Domäne bzw. Ziel-Verteilung aufzuprägen. Die Anpassungs-Modelle sind somit ein Stück weit vergleichbar mit Filtern, die auf das Objektiv einer Fotokamera aufgesetzt oder nach der physischen Aufnahme mit Nachbearbeitungs-Software auf das Bild angewendet werden. Der Stil ist vom semantischen Inhalt des Daten-Records zu unterscheiden. Vielmehr ist es durch den jeweiligen Stil festgelegt, wie ein semantischer Inhalt sich im Daten-Record, bzw. im Ziel-Record, manifestiert.

Der Daten-Record wird jedem ausgewählten Anpassungs-Modell zugeführt, so dass jeweils ein Zwischenergebnis in der Sub-Domäne bzw. Sub-Verteilung der Ziel-Domäne bzw. Ziel-Verteilung entsteht. Diese Zwischenergebnisse werden zu dem gesuchten Ziel-Record zusammengeführt.

Dieses Zusammenführen kann in beliebiger Form erfolgen. Es kann beispielsweise nach einem beliebigen Kriterium ein einziges Zwischenergebnis ausgewählt und hieraus der Ziel-Record gebildet werden. Es können aber auch mehrere Zwischenergebnisse miteinander vermischt werden. Hierzu können die Zwischenergebnisse in einer besonders vorteilhaften Ausgestaltung durch Linearkombination oder eine beliebige andere Aggregation zu dem gesuchten Ziel-Record zusammengeführt werden.

Es wurde erkannt, dass beim Überführen von Daten-Records in eine vorgegebene Ziel-Domäne oder Ziel-Verteilung mit bisherigen Verfahren die Priorität häufig darauf liegt, dass die entstehenden Ziel-Records "gute" Mitglieder der Ziel-Domäne bzw. Ziel-Verteilung sind. Dies kann insbesondere beispielsweise bedeuten, dass sich die Ziel-Records nicht oder nur schwer von bereits bekannten Mitgliedern der Ziel-Domäne bzw. Ziel-Verteilung unterscheiden lassen. Während diese Eigenschaft der Ziel-Records als solche durchaus erwünscht ist, hat die primäre Fokussierung des Domänentransfers hierauf die Nebenwirkung, dass die entstehenden Ziel-Records in der Ziel-Domäne bzw. Ziel-Verteilung vergleichsweise ähnlich sind und nahe beieinander liegen.

Dies wiederum bedeutet, dass beim Domänentransfer einer großen Menge von Daten-Records erwünschte Eigenschaften der Verteilung dieser Daten-Records nicht oder nicht vollständig in die Ziel-Domäne bzw. Ziel-Verteilung übertragen werden.

Zum einen kann eine durch Domänentransfer erzeugte Menge von Ziel-Records insgesamt möglicherweis eine zu geringe Variabilität aufweisen, so dass die Ziel-Domäne bzw. Ziel-Verteilung möglicherweise nicht gut genug abgedeckt wird.

Zum anderen können auch Unterschiede zwischen bestimmten Sub-Domänen in der Menge der erzeugten Ziel-Records verlorengehen, da es für den Domänentransfer keinen Anlass gibt, hierauf zu achten. Damit kann in der Menge der Ziel-Records wichtige Information aus der Menge der ursprünglichen Daten-Records fehlen. Dies kann insbesondere dann auftreten, wenn bereits in der Menge der ursprünglichen Daten-Records bestimmte Sub-Domänen unterrepräsentiert sind.

Wenn die Daten-Records beispielsweise Bilder von Verkehrssituationen umfassen, kann ein Ungleichgewicht dahingehend bestehen, dass die meisten Bilder am Tage aufgenommen wurden und nur wenige Bilder in der Nacht. Es gibt dann wenig Anlass für den Domänentransfer, so zu arbeiten, dass bei Nacht aufgenommene Bilder gut in der insgesamt entstehenden Menge der Ziel-Records repräsentiert sind. Vielmehr können beispielsweise in der Menge der Ziel-Records überhaupt keine nächtlichen Bilder mehr enthalten sein. Es ist auch beispielsweise möglich, dass der Domänentransfer den Unterschied zwischen Tag und Nacht für nicht wichtig hält. Es kann dann eine Art gemittelter Stil in die Ziel-Domäne bzw. Ziel-Verteilung übertragen werden, der diesen Unterschied verwischt.

Diese Effekte wirken sich insbesondere auf das Training oder den Test eines Machine Learning-Modells mit den Ziel-Records aus. Ein Training auf Ziel-Records mit einer zu geringen Variabilität und/oder fehlender Berücksichtigung wichtiger Unterschiede verschlechtert die Fähigkeit des Machine Learning-Modells zur Verallgemeinerung auf im Training ungesehene Daten, und somit seine Leistung im späteren realen Einsatz. Ein Test eines bereits trainierten Machine Learning-Modells auf diesen Daten liefert möglicherweise ein zu wohlwollendes Ergebnis, das nicht die zu erwartende Leistung im realen Einsatz widerspiegelt.

Indem nun separate Anpassungs-Modelle genutzt werden, die dem Daten-Record Stile verschiedener Sub-Domänen bzw. Sub-Verteilung der Ziel-Domäne bzw. Ziel-Verteilung aufprägen, wird eine Kontrolle darüber erlangt, wie gut die Ziel-Domäne bzw. Ziel-Verteilung insgesamt abgedeckt wird. Hiermit können sowohl die generelle Variabilität der Ziel-Records als auch die Repräsentanz bestimmter Sub-Domänen bzw. Sub-Verteilungen eingestellt werden. Beispielsweise kann ein Datensatz mit Ziel-Records erstellt werden, der ein gewisses Quantum an Tages-Bildern und ein gewisses Quantum an Nacht-Bildern aufweist.

Die Ziel-Domäne bzw. Ziel-Verteilung kann in beliebiger Weise festgelegt sein. In einer besonders vorteilhaften Ausgestaltung wird die Ziel-Domäne bzw. Ziel-Verteilung jedoch durch eine Menge von Beispiel-Records festgelegt, die dieser Ziel-Domäne bzw. Ziel-Verteilung angehören. Auf diese Weise kann insbesondere beispielsweise eine Datenaugmentierung dergestalt erreicht werden, dass eine bestehende Menge von Beispiel-Records durch in gleicher Weise für das Training und den Test eines Machine Learning-Modells nutzbare Ziel-Records angereichert wird.

Zu diesem Zweck kann insbesondere beispielsweise die Menge von Beispiel-Records der Ziel-Domäne in Cluster unterteilt werden, wobei eine beliebige Methode zum Einsatz kommen kann, wie beispielsweise k-means-Clustering mit einer vorgegebenen Anzahl von Clustern. Diese Cluster können dann als Sub-Domänen bzw. Sub-Verteilungen der Ziel-Domäne bzw. Ziel-Verteilung gewählt werden. Ferner können nun speziell für die Daten der jeweilige Sub-Domänen zugeschnittene Anpassungs-Modelle verwendet werden, um den Stil der Sub-Domäne zu repräsentieren bzw. auf andere Beispiel-Records zu übertragen. Das Clustern hat in diesem Zusammenhang den Vorteil, dass es kein Vorwissen hinsichtlich möglicher Unterscheidungsmerkmale zwischen den Sub-Domänen bzw. Sub-Verteilungen erfordert. Insbesondere ist das Clustern auch nicht darauf angewiesen, dass die Beispiel-Records in irgendeiner Weise gelabelt sind oder auch nur Pseudo-Labels für die Beispiel-Records verfügbar sind.

Hierbei ist es nicht erforderlich, dass alle Beispiel-Records einem der gebildeten Cluster angehören. Es kann vielmehr bei jeder Aufteilung in Cluster auch Ausreißer geben, die keinem der Cluster angehören. Je nach konkret vorliegender Anwendung können auch diese Ausreißer eine wichtige Bedeutung haben. In einer weiteren besonders vorteilhaften Ausgestaltung werden daher Beispiel-Records, die keinem der Cluster angehören, als weitere Sub-Domäne bzw. Sub-Verteilung der Ziel-Domäne bzw. Ziel-Verteilung gewählt.

In einer weiteren besonders vorteilhaften Ausgestaltung werden Sub-Domänen bzw. Sub-Verteilungen gewählt, deren Stile jeweils
- durch Unterschiede im Prozess der Aufnahme der Beispiel-Records festgelegt sind, und/oder
- durch Stilmerkmale, die ein trainierter Merkmalsextraktor aus den Beispiel-Records ermittelt hat, und/oder
- durch Unterschiede in statistischen Kenngrößen, und/oder in Frequenzdarstellungen, der Beispiel-Records
charakterisiert werden.

Beispielsweise können zusammen mit den Beispiel-Records Metadaten abgespeichert sein, die sich auf bestimmte Merkmale der Stile von Beispiel-Records beziehen. Diese Metadaten können beispielsweise aus einer Beschreibung des operationellen Designs des Prozesses (engl. Operational Design Domain), durch den die Beispiel-Records aufgenommen wurden, erhalten werden.

Als statistische Kenngrößen sind prinzipiell alle Größen verwendbar, die die in einem Beispiel-Record enthaltenen Werte verdichten und eine zusammenfassende Aussage hierüber treffen, wie beispielsweise statistische Momente. Als Frequenzdarstellungen können beispielsweise Zerlegungen des Beispiel-Records in Fourier-Komponenten oder Wavelet-Komponenten verwendet werden.

In einer weiteren besonders vorteilhaften Ausgestaltung umfasst der Daten-Record mindestens ein Bild. Es werden für die Aufteilung der Ziel-Domäne bzw. Ziel-Verteilung Sub-Domänen bzw. Sub-Verteilungen von Bildern gewählt, die sich in
- für die Bildaufnahme verwendeten Kameras und/oder Zusatzgeräten, und/oder
- Tageszeiten bei der Bildaufnahme, und/oder
- Jahreszeiten bei der Bildaufnahme, und/oder
- Wetterverhältnissen bei der Bildaufnahme, und/oder
- Lichtverhältnissen bei der Bildaufnahme,
unterscheiden. Wie zuvor erläutert, kann auf diese Weise sichergestellt werden, dass die Ziel-Domäne hinsichtlich dieser Eigenschaften gut abgedeckt ist und beispielsweise keine Tageszeit oder Jahreszeit völlig unterrepräsentiert ist. Gerade bezüglich der hier genannten Eigenschaften wird von Machine Learning-Modellen, die Bilder als Eingaben verarbeiten, in vielen Anwendungen eine große Kraft zur Verallgemeinerung gefordert.

In einer weiteren besonders vorteilhaften Ausgestaltung werden die Zwischenergebnisse mehrmals in unterschiedlicher Weise zusammengeführt, um so aus ein und demselben Daten-Record mehrere unterschiedliche Ziel-Records zu erzeugen. Auf diese Weise kann die Variabilität der Ziel-Records nochmals gesteigert werden.

In einer weiteren besonders vorteilhaften Ausgestaltung wird ein synthetisch generierter Daten-Record, der eine selten auftretende und/oder kritische Situation eines technischen Systems repräsentiert, gewählt. Wie zuvor erläutert, kann die Ziel-Domäne und/oder Ziel-Verteilung damit insbesondere um neue Records bereichert werden, die sich auf solche messtechnisch schwer zu erfassenden Situationen beziehen. So sind beispielsweise besonders kritische Verkehrssituationen bis hin zu Beinahe-Unfällen (sogenannte "corner cases") zu gefährlich, als dass man sie absichtlich herbeiführen könnte, nur um hiervon Bilder anzufertigen. Andere Situationen, wie etwa extremer Schneefall, kommen nur sehr selten und schwer vorhersehbar vor. Gleichwohl muss beispielsweise ein zumindest teilweise automatisiert fahrendes Fahrzeug, das sein Umfeld beispielsweise durch Aufnahme von Bildern überwacht, in der Lage sein, diese Situationen, wenn sie denn vorkommen, zu meistern. Ähnliches gilt beispielsweise für Dysbalancen zwischen Häufigkeiten, mit denen Verkehrszeichen im öffentlichen Raum vorkommen, einerseits und Wichtigkeiten dieser Verkehrszeichen andererseits. So kommen beispielsweise Vorfahrtzeichen sehr häufig vor und sind auch sehr wichtig, da sie der Vermeidung von Kollisionen dienen. Wesentlich seltener kommen Verkehrszeichen vor, die vor einem Bahnübergang oder einem ungesicherten Ufer warnen. Gleichwohl ist jedes Vorkommen dieser Verkehrszeichen nicht minder wichtig als ein Vorfahrtzeichen.

In einer weiteren besonders vorteilhaften Ausgestaltung wird der Ziel-Record als Trainings-Beispiel für ein Machine Learning-Modell genutzt, indem
- dieser Ziel-Record dem Machine Learning-Modell zugeführt wird und
- eine Abweichung der hierbei erhaltenen Ausgabe von einer erwarteten Ausgabe als Feedback für die Optimierung von Parametern, die das Verhalten des Machine Learning-Modells charakterisieren, verwendet wird.
Wie zuvor erläutert, wirkt sich die bessere Abdeckung der Ziel-Domäne bzw. Ziel-Verteilung durch die Ziel-Records dahingehend aus, dass das Machine Learning-Modell auf dieser Ziel-Domäne bzw. Ziel-Verteilung eine große Kraft zur Verallgemeinerung besitzt. Hierdurch kann die Leistung des Machine Learning-Modells im realen Einsatz mit Messdaten verbessert werden.

In einer weiteren besonders vorteilhaften Ausgestaltung wird der Ziel-Record als Test- oder Validierungs-Beispiel für ein trainiertes Machine Learning-Modell genutzt, indem
- der Ziel-Record dem trainierten Machine Learning-Modell zugeführt wird und
- eine Abweichung der hierbei erhaltenen Ausgabe von einer erwarteten Ausgabe als Indikator für die Leistung des trainierten Machine Learning-Modells verwendet wird.
Wie zuvor erläutert, wird die Bewertung der Leistung des trainierten Machine Learning-Modells hierdurch objektiver. Einer Tendenz, dass wegen der nur unvollständigen Abdeckung der Ziel-Domäne bzw. Ziel-Verteilung die Abweichungen systematisch unterschätzt werden und somit die Leistung des Machine Learning-Modells systematisch überschätzt wird, wird entgegengewirkt.

Besonders vorteilhaft wird eine Soll-Ausgabe, mit der der für die Erzeugung des Ziel-Records verwendete ursprüngliche Daten-Record gelabelt ist, als erwartete Ausgabe gewählt. Auf diese Weise kann das für den ursprünglichen Daten-Record beschaffte Label auch in der Ziel-Domäne bzw. Ziel-Verteilung weiterverwendet werden. Der hier vorgeschlagene Domänentransfer stellt sicher, dass das Label auch in der Ziel-Domäne bzw. Ziel-Verteilung sachgerecht ist, denn der semantische Inhalt des Daten-Records wird beim Domänentransfer zum Ziel-Record nicht verändert.

Dies lässt sich am Bild einer modernen computerunterstützten Fahrausbildung für den Straßenverkehr veranschaulichen. Hier wird der Fahrschüler in einem Fahrsimulator mit simulierten Bildern von Verkehrssituationen konfrontiert und bekommt für seine jeweilige Reaktion Feedback vom Fahrlehrer in Form der Soll-Reaktion, die angemessen gewesen wäre. Die simulierten Bilder sind also mit Soll-Reaktionen gelabelt. Zur Vorbereitung auf die praktische Prüfung, in der der Fahrschüler mit realen Verkehrssituationen konfrontiert wird, kann er mit dem hier vorgeschlagenen Verfahren einen Domänentransfer hin zur Ziel-Domäne der Bilder von realen Verkehrssituationen vornehmen und sich hieraus eine Lernkartei anfertigen, in der zu jedem Bild das ursprünglich in der Domäne der simulierten Bilder erhaltene Feedback vermerkt ist. Dieses Feedback ist auch für die Ziel-Bilder nach wie vor gültig. Um die Aufgabe etwas schwieriger zu machen, können die Ziel-Bilder beispielsweise in unterschiedliche Wetterbedingungen, Tageszeiten, Jahreszeiten oder auch in unterschiedliche Städte transformiert werden. Dann reicht es für den Fahrschüler nicht mehr aus, die Karten einfach stupide auswendig zu lernen. Stattdessen muss der Fahrschüler den semantischen Gehalt der jeweiligen Situation erfassen und die richtigen Schlüsse daraus ziehen.

Das Machine Learning-Modell kann insbesondere beispielsweise ein Bildklassifikator sein, der für ein eingegebenes Bild oder Teile hiervon Klassifikations-Scores in Bezug auf eine oder mehrere Klassen einer vorgegebenen Klassifikation ermittelt. Das Machine Learning-Modell kann auch beispielsweise ein semantischer Segmentierer sein, der jedem Pixel eines eingegebenen Bildes eine Klasse zuordnet. Insbesondere kann auch beispielsweise ein Objektdetektor, der Objektinstanzen in Bildern erkennt und/oder deren Typ bestimmt, als Bildklassifikator gewertet werden. Der Begriff des Bildes ist nicht auf Kamerabilder, die mit sichtbarem Licht angefertigt werden, beschränkt, sondern umfasst ausdrücklich auch alle anderen Messmodalitäten, deren Messergebnisse in Bildform sinnvoll darstellbar sind, wie etwa Radar-, Lidar-, Ultraschall- oder Wärmebilder.

In einer weiteren besonders vorteilhaften Ausgestaltung werden dem trainierten Machine Learning-Modell Messdaten-Records mit Messdaten zugeführt. Aus der Ausgabe des trainierten Machine Learning-Modells wird ein Ansteuersignal gebildet. Ein Fahrzeug, ein Fahrassistenzsystem, ein Roboter, ein System zur Qualitätskontrolle, ein System zur Überwachung von Bereichen, und/oder ein System zur medizinischen Bildgebung, wird mit dem Ansteuersignal angesteuert. Die verbesserte Leistung des trainierten Machine Learning-Modells, verursacht durch die bessere Variabilität der verwendeten Trainings-Beispiele, führt in diesem Kontext dazu, dass die von dem jeweils angesteuerten technischen System auf das Ansteuersignal vollführte Reaktion mit einer höheren Wahrscheinlichkeit der in den Messdaten verkörperten Situation angemessen ist.

Das Verfahren kann insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern und/oder Compute-Instanzen ausgeführt werden, den oder die Computer und/oder Compute-Instanzen dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder serverlose Ausführungsumgebungen sein, die insbesondere in einer Cloud bereitgestellt werden können.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer und/oder Compute-Instanzen mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Überführen eines Daten-Records 1, der Messdaten repräsentiert, in einen Ziel-Record 5 mit gleichem oder ähnlichem semantischem Inhalt;
Figur 2 Beispielhafte Anwendung des Verfahrens 100 zum Trainieren eines Machine Learning-Modells 7;
Figur 3 Beispielhafte Anwendung des Verfahrens 100 zum Testen eines trainierten Machine Learning-Modells 7*;
Figur 4 Verbesserung sowohl des Trainings als auch des Tests durch Nutzung einer großen Bibliothek von Anpassungs-Modellen 2.

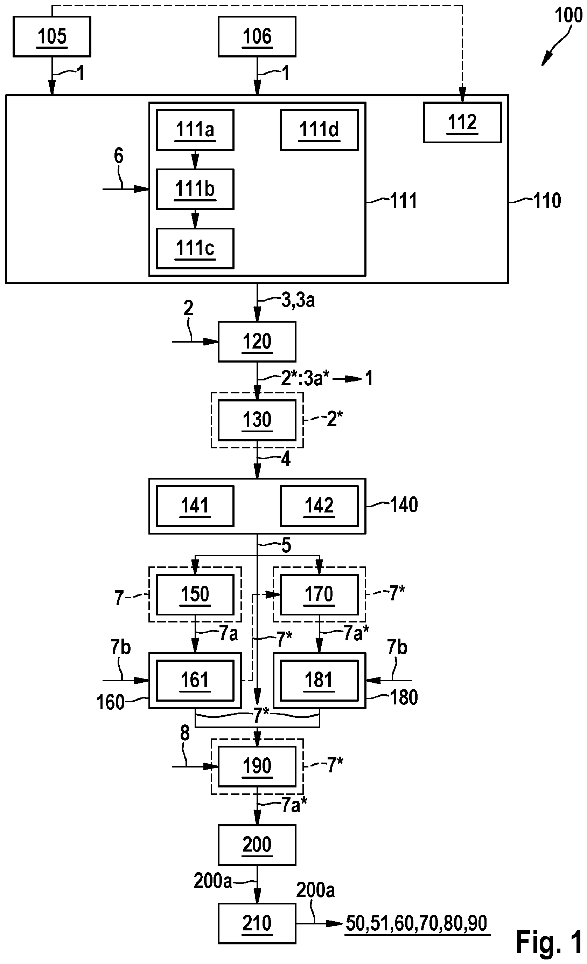

Figur 1 ist ein schematisches Ablaufdiagramm eines Ausführungsbeispiels des Verfahrens 100 zum Überführen eines Daten-Records 1, der Messdaten repräsentiert, in einen Ziel-Record 5 mit gleichem oder ähnlichem semantischem Inhalt.

Gemäß Block 105 kann der Daten-Record 1 mindestens ein Bild umfassen.

Gemäß Block 106 kann ein synthetisch generierter Daten-Record 1, der eine selten auftretende und/oder kritische Situation eines technischen Systems repräsentiert, gewählt werden.

In Schritt 110 wird die Ziel-Domäne oder Ziel-Verteilung 3, der der Ziel-Record 5 angehören soll, festgelegt.

Gemäß Block 111 kann diese Ziel-Domäne bzw. Ziel-Verteilung 3 durch eine Menge von Beispiel-Records 6, die dieser Ziel-Domäne bzw. Ziel-Verteilung 3 angehören, festgelegt werden.

Zu diesem Zweck kann gemäß Block 111a die Menge von Beispiel-Records 6 in Cluster unterteilt werden. Diese Cluster können dann gemäß Block 111b als Sub-Domänen bzw. Sub-Verteilungen 3a der Ziel-Domäne bzw. Ziel-Verteilung 3 gewählt werden. Optional können dann zusätzlich gemäß Block 111c Beispiel-Records 6, die keinem der Cluster angehören (bspw. ein Ausreißer, der aber einen wichtige Sub-Domäne repräsentiert), als weitere Sub-Domäne bzw. Sub-Verteilung 3a der Ziel-Domäne bzw. Ziel-Verteilung 3 gewählt werden.

Gemäß Block 111d können Sub-Domänen bzw. Sub-Verteilungen 3a gewählt werden, deren Stile jeweils
- durch Unterschiede im Prozess der Aufnahme der Beispiel-Records 6 festgelegt sind, und/oder
- durch Stilmerkmale, die ein trainierter Merkmalsextraktor aus den Beispiel-Records 6 ermittelt hat, und/oder
- durch Unterschiede in statistischen Kenngrößen, und/oder in Frequenzdarstellungen, der Beispiel-Records 6
charakterisiert werden.

Insoweit der Daten-Record gemäß Block 105 mindestens ein Bild umfasst, können gemäß Block 112 Sub-Domänen bzw. Sub-Verteilungen 3a von Bildern gewählt werden, die sich in
- für die Bildaufnahme verwendeten Kameras und/oder Zusatzgeräten, und/oder
- Tageszeiten bei der Bildaufnahme, und/oder
- Jahreszeiten bei der Bildaufnahme, und/oder
- Wetterverhältnissen bei der Bildaufnahme, und/oder
- Lichtverhältnissen bei der Bildaufnahme, unterscheiden.

In Schritt 120 werden anhand des Daten-Records 1 werden ein oder mehrere Anpassungs-Modelle 2* aus einem vorgegebenen Katalog von Anpassungs-Modellen 2 ausgewählt. Diese Anpassungs-Modelle 2* sind jeweils dazu ausgebildet, dem Daten-Record 1 einen Stil 3a* einer Sub-Domäne bzw. Sub-Verteilung 3a der Ziel-Domäne bzw. Ziel-Verteilung 3 aufzuprägen.

In Schritt 130 wird der Daten-Record 1 jedem ausgewählten Anpassungs-Modell 2* zugeführt. Dadurch entsteht jeweils ein Zwischenergebnis 4 in der Sub-Domäne bzw. Sub-Verteilung 3a der Ziel-Domäne bzw. Ziel-Verteilung 3.

In Schritt 140 werden die Zwischenergebnisse 4 zu dem gesuchten Ziel-Record 5 zusammengeführt.

Gemäß Block 141 können die Zwischenergebnisse 4 durch Linearkombination oder eine beliebige andere Aggregation zu dem gesuchten Ziel-Record 5 zusammengeführt werden.

Gemäß Block 142 können die Zwischenergebnisse 4 mehrmals in unterschiedlicher Weise zusammengeführt werden, um so aus ein und demselben Daten-Record 1 mehrere unterschiedliche Ziel-Records 5 zu erzeugen.

In dem in Figur 1 gezeigten Beispiel wird der in Schritt 140 erhaltene Ziel-Record 5 als Trainings-Beispiel für ein Machine Learning-Modell 7 genutzt, indem
- in Schritt 150 dieser Ziel-Record 5 dem Machine Learning-Modell 7 zugeführt wird und
- in Schritt 160 eine Abweichung der hierbei erhaltenen Ausgabe 7a von einer erwarteten Ausgabe 7b als Feedback für die Optimierung von Parametern, die das Verhalten des Machine Learning-Modells 7 charakterisieren, verwendet wird. Hierzu wird üblicherweise eine Kostenfunktion (Loss-Funktion) verwendet, die von der Abweichung abhängt.

In dem in Figur 1 gezeigten Beispiel wird weiterhin der in Schritt 140 erhaltene Ziel-Record 5 als Test- oder Validierungs-Beispiel für ein trainiertes Machine Learning-Modell 7* genutzt, indem
- in Schritt 170 der Ziel-Record 5 dem trainierten Machine Learning-Modell 7* zugeführt wird und
- in Schritt 180 eine Abweichung der hierbei erhaltenen Ausgabe 7a* von einer erwarteten Ausgabe 7b als Indikator für die Leistung des trainierten Machine Learning-Modells 7* verwendet wird.
Hierbei kann insbesondere beispielsweise das trainierte Machine Learning-Modell 7* verwendet werden, das zuvor als Ergebnis des Schritts 160 erhalten wurde.

Gemäß den Blöcken 161 bzw. 181 kann eine Soll-Ausgabe, mit der der für die Erzeugung des Ziel-Records 5 verwendete ursprüngliche Daten-Record gelabelt ist, als erwartete Ausgabe 7b gewählt werden.

In dem in Figur 1 gezeigten Beispiel werden in Schritt 190 dem trainierten Machine Learning-Modell 7* Messdaten-Records 8 mit Messdaten zugeführt. Diese Messdaten-Records 8 gehören der Ziel-Domäne bzw. Ziel-Verteilung 3 an, der auch die in Schritt 140 erzeugten Ziel-Records 5 angehören. In Schritt 200 wird aus der Ausgabe 7a* des trainierten Machine Learning-Modells 7* ein Ansteuersignal 200a gebildet. In Schritt 210 wird ein Fahrzeug 50, ein Fahrassistenzsystem 51, ein Roboter 60, ein System 70 zur Qualitätskontrolle, ein System 80 zur Überwachung von Bereichen, und/oder ein System 90 zur medizinischen Bildgebung, mit dem Ansteuersignal 200a angesteuert.

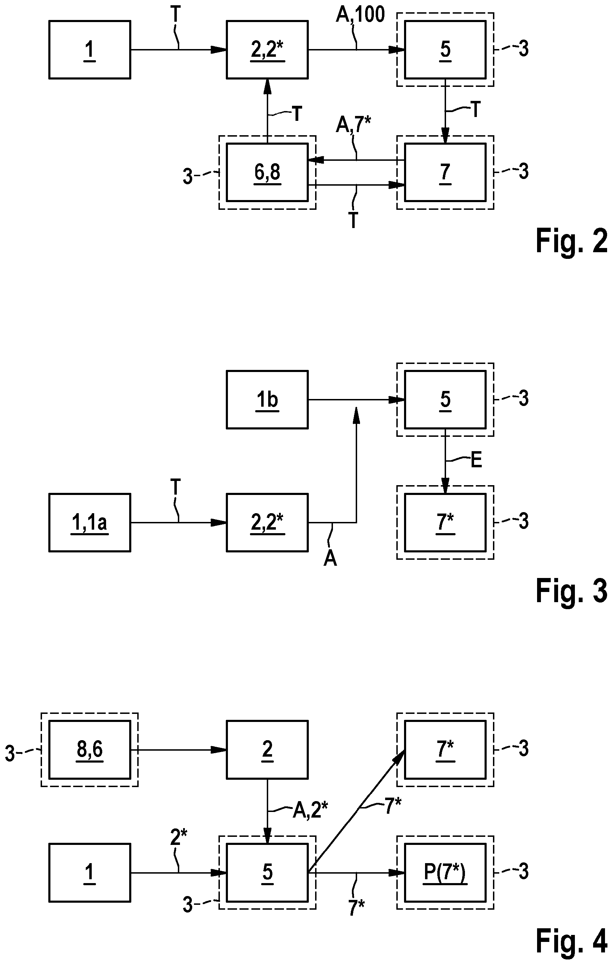

Figur 2 veranschaulicht eine beispielhafte Anwendung des Verfahrens 100 zum Trainieren eines Machine Learning-Modells 7. Anhand von Daten-Records 1 aus einer Quell-Domäne bzw. Quell-Verteilung einerseits sowie Messdaten 8 aus der Ziel-Domäne bzw. Ziel-Verteilung 3 andererseits, wie beispielsweise Beispiel-Records 6, lassen sich Anpassungs-Modelle 2, 2* trainieren (T). Die ein oder mehreren Anpassungs-Modelle 2* können dann im Rahmen des Verfahrens 100 auf die Daten-Records 1 angewendet werden (A), so dass Ziel-Records 5 entstehen. Diese Ziel-Records 5 können dann zusammen mit den Beispiel-Records 6 verwendet werden, um ein Machine Learning-Modell 7 in der Ziel-Domäne bzw. Ziel-Verteilung 3 zu trainieren (T). Sodann kann das trainierte Machine Learning-Model 7* auf Messdaten 8 in der Ziel-Domäne bzw. Ziel-Verteilung 3 angewendet werden (A).

Optional kann die Leistung des trainierten Machine Learning-Modells 7* gemessen werden. Ist diese Leistung auf den generierten Ziel-Records 5 besonders schlecht, kann dies als Feedback zur Verbesserung der Anpassungs-Modelle 2, 2* genutzt werden.

Als Anpassungs-Modell 2, 2* für den Domänentransfer kann jede beliebige bekannte Art von Modell genutzt werden. Die Kernidee des hier vorgeschlagenen Verfahrens ist die Nutzung unterschiedlicher Anpassungs-Modelle 2, 2* für unterschiedliche Sub-Domänen bzw. Sub-Verteilungen 3a der Ziel-Domäne bzw. Ziel-Verteilung 3.

Figur 3 veranschaulicht eine beispielhafte Anwendung des Verfahrens 100 zum Testen eines bereits trainierten Machine Learning-Modells 7*. Analog zu Figur 2 können ein oder mehrere Anpassungs-Modelle 2, 2* mit Trainings-Daten 1,1a aus der Quell-Domäne bzw. Quell-Verteilung trainiert werden (T). Die ausgewählten Anpassungs-Modelle 2* können dann auf Test-Daten 1,1b aus der Quell-Domäne bzw. Quell-Verteilung angewendet werden (A), so dass Ziel-Records 5 in der Ziel-Domäne bzw. Ziel-Verteilung 3 entstehen. Diese Ziel-Records 5 können als Test-Daten verwendet werden, um das trainierte Machine Learning-Modell 7*, das auf der Ziel-Domäne bzw. Ziel-Verteilung 3 arbeitet, zu bewerten (E).

Figur 4 veranschaulicht, wie eine größere Sammlung von Anpassungs-Modellen 2 sowohl das Training als auch den Test von Machine Learning-Modellen 7, 7* mit einer verbesserten Variabilität bereichern kann. Anhand einer großen Sammlung von Beispiel-Records 6 und/oder Messdaten 8, die der Ziel-Domäne bzw. Ziel-Verteilung 3 angehören, kann ein Pool von Anpassungs-Modellen 2 erstellt werden. Ein oder mehrere ausgewählte Anpassungs-Modelle 2* werden dann auf Daten-Records 1 angewendet, um Ziel-Records 5 in der Ziel-Domäne oder Ziel-Verteilung 3 zu erzeugen. Mit diesen Ziel-Records 5 kann dann ein Machine Learning-Modell 7 so trainiert werden, dass sein trainierter Zustand 7* besser auf die Messdaten 8 in der großen Sammlung generalisiert. Alternativ oder auch in Kombination hierzu kann die Leistung P(7*) eines bereits trainierten Machine Learning-Modells 7* auf Grund der höheren Variabilität der Ziel-Records 5 zutreffender bewertet werden.

## Patentansprüche

1. Verfahren (100) zum Überführen eines Daten-Records (1), der Messdaten repräsentiert, in einen Ziel-Record (5) mit gleichem oder ähnlichem semantischem Inhalt, der einer vorgegebenen Ziel-Domäne oder Ziel-Verteilung (3) angehört, mit den Schritten:
• die Ziel-Domäne oder Ziel-Verteilung (3) wird festgelegt (110);
• anhand des Daten-Records (1) werden ein oder mehrere Anpassungs-Modelle (2*) aus einem vorgegebenen Katalog von Anpassungs-Modellen (2) ausgewählt (120), die jeweils dazu ausgebildet sind, dem Daten-Record (1) einen Stil (3a*) einer Sub-Domäne bzw. Sub-Verteilung (3a) der Ziel-Domäne bzw. Ziel-Verteilung (3) aufzuprägen;
• der Daten-Record (1) wird jedem ausgewählten Anpassungs-Modell (2*) zugeführt (130), so dass jeweils ein Zwischenergebnis (4) in der Sub-Domäne bzw. Sub-Verteilung (3a) der Ziel-Domäne bzw. Ziel-Verteilung (3) entsteht; und
• die Zwischenergebnisse (4) werden zu dem gesuchten Ziel-Record (5) zusammengeführt (140).

2. Verfahren (100) nach Anspruch 1, wobei die Ziel-Domäne bzw. Ziel-Verteilung (3) durch eine Menge von Beispiel-Records (6) festgelegt wird (111), die dieser Ziel-Domäne bzw. Ziel-Verteilung (3) angehören.

3. Verfahren (100) nach Anspruch 2, wobei
• die Menge von Beispiel-Records (6) in Cluster unterteilt wird (111a) und
• diese Cluster als Sub-Domänen bzw. Sub-Verteilungen (3a) der Ziel-Domäne bzw. Ziel-Verteilung (3) gewählt werden (111b).

4. Verfahren (100) nach Anspruch 3, wobei Beispiel-Records (6), die keinem der Cluster angehören, als weitere Sub-Domäne bzw. Sub-Verteilung (3a) der Ziel-Domäne bzw. Ziel-Verteilung (3) gewählt werden (111c).

5. Verfahren (100) nach einem der Ansprüche 2 bis 4, wobei Sub-Domänen bzw. Sub-Verteilungen (3a) gewählt werden (111d), deren Stile jeweils
• durch Unterschiede im Prozess der Aufnahme der Beispiel-Records (6) festgelegt sind, und/oder
• durch Stilmerkmale, die ein trainierter Merkmalsextraktor aus den Beispiel-Records (6) ermittelt hat, und/oder
• durch Unterschiede in statistischen Kenngrößen, und/oder in Frequenzdarstellungen, der Beispiel-Records (6)
charakterisiert werden.

6. Verfahren (100) nach einem der Ansprüche 1 bis 5, wobei der Daten-Record (1) mindestens ein Bild umfasst (105) und Sub-Domänen bzw. Sub-Verteilungen (3a) von Bildern gewählt werden (112), die sich in
• für die Bildaufnahme verwendeten Kameras und/oder Zusatzgeräten, und/oder
• Tageszeiten bei der Bildaufnahme, und/oder
• Jahreszeiten bei der Bildaufnahme, und/oder
• Wetterverhältnissen bei der Bildaufnahme, und/oder
• Lichtverhältnissen bei der Bildaufnahme,
unterscheiden.

7. Verfahren (100) nach einem der Ansprüche 1 bis 6, wobei die Zwischenergebnisse (4) durch Linearkombination oder eine beliebige andere Aggregation zu dem gesuchten Ziel-Record (5) zusammengeführt werden (141).

8. Verfahren (100) nach einem der Ansprüche 1 bis 7, wobei die Zwischenergebnisse (4) mehrmals in unterschiedlicher Weise zusammengeführt werden (142), um so aus ein und demselben Daten-Record (1) mehrere unterschiedliche Ziel-Records (5) zu erzeugen.

9. Verfahren (100) nach einem der Ansprüche 1 bis 8, wobei ein synthetisch generierter Daten-Record (1), der eine selten auftretende und/oder kritische Situation eines technischen Systems repräsentiert, gewählt wird (106).

10. Verfahren (100) nach einem der Ansprüche 1 bis 9, wobei der Ziel-Record (5) als Trainings-Beispiel für ein Machine Learning-Modell (7) genutzt wird, indem
• dieser Ziel-Record (5) dem Machine Learning-Modell (7) zugeführt wird (150) und
• eine Abweichung der hierbei erhaltenen Ausgabe (7a) von einer erwarteten Ausgabe (7b) als Feedback für die Optimierung von Parametern, die das Verhalten des Machine Learning-Modells (7) charakterisieren, verwendet wird (160).

11. Verfahren (100) nach einem der Ansprüche 1 bis 10, wobei der Ziel-Record (5) als Test- oder Validierungs-Beispiel für ein trainiertes Machine Learning-Modell (7*) genutzt wird, indem
• der Ziel-Record (5) dem trainierten Machine Learning-Modell (7*) zugeführt wird (170) und
• eine Abweichung der hierbei erhaltenen Ausgabe (7a*) von einer erwarteten Ausgabe (7b) als Indikator für die Leistung des trainierten Machine Learning-Modells (7*) verwendet wird (180).

12. Verfahren (100) nach einem der Ansprüche 10 bis 11, wobei eine Soll-Ausgabe, mit der der für die Erzeugung des Ziel-Records (5) verwendete ursprüngliche Daten-Record gelabelt ist, als erwartete Ausgabe (7b) gewählt wird (161, 181).

13. Verfahren (100) nach einem der Ansprüche 10 bis 12, wobei
• dem trainierten Machine Learning-Modell (7*) Messdaten-Records (8) mit Messdaten zugeführt werden (190),
• aus der Ausgabe (7a*) des trainierten Machine Learning-Modells (7*) ein Ansteuersignal (200a) gebildet wird (200) und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (200a) angesteuert wird (210).

14. Computerprogramm, enthaltend maschinenlesbare Anweisungen, die, wenn sie auf einem oder mehreren Computern und/oder Compute-Instanzen ausgeführt werden, den oder die Computer dazu veranlassen, das Verfahren (100) nach einem der Ansprüche 1 bis 13 auszuführen.

15. Maschinenlesbarer Datenträger und/oder Downloadprodukt mit dem Computerprogramm nach Anspruch 14.

16. Ein oder mehrere Computer und/oder Compute-Instanzen mit dem Computerprogramm nach Anspruch 14, und/oder mit dem maschinenlesbaren Datenträger und/oder Downloadprodukt nach Anspruch 15.

## Geänderte Patentansprüche

### Geänderte Patentansprüche gemäss Regel 137(2) EPÜ.

1. Computerimplementiertes Verfahren (100) zum Überführen eines Daten-Records (1), der Messdaten repräsentiert, in einen Ziel-Record (5) mit gleichem oder ähnlichem semantischem Inhalt, der einer vorgegebenen Ziel-Domäne oder Ziel-Verteilung (3) angehört, mit den Schritten:
• die Ziel-Domäne oder Ziel-Verteilung (3) wird festgelegt (110);
• anhand des Daten-Records (1) werden ein oder mehrere Anpassungs-Modelle (2*) aus einem vorgegebenen Katalog von Anpassungs-Modellen (2) ausgewählt (120), die jeweils dazu ausgebildet sind, dem Daten-Record (1) einen Stil (3a*) einer Sub-Domäne bzw. Sub-Verteilung (3a) der Ziel-Domäne bzw. Ziel-Verteilung (3) aufzuprägen, wobei es durch den jeweiligen Stil (3a*) festgelegt ist, wie ein semantischer Inhalt sich im Daten-Record (1), bzw. im Ziel-Record (5), manifestiert;
• der Daten-Record (1) wird jedem ausgewählten Anpassungs-Modell (2*) zugeführt (130), so dass jeweils ein Zwischenergebnis (4) in der Sub-Domäne bzw. Sub-Verteilung (3a) der Ziel-Domäne bzw. Ziel-Verteilung (3) entsteht; und
• die Zwischenergebnisse (4) werden zu dem gesuchten Ziel-Record (5) zusammengeführt (140).

2. Verfahren (100) nach Anspruch 1, wobei die Ziel-Domäne bzw. Ziel-Verteilung (3) durch eine Menge von Beispiel-Records (6) festgelegt wird (111), die dieser Ziel-Domäne bzw. Ziel-Verteilung (3) angehören.

3. Verfahren (100) nach Anspruch 2, wobei
• die Menge von Beispiel-Records (6) in Cluster unterteilt wird (111a) und
• diese Cluster als Sub-Domänen bzw. Sub-Verteilungen (3a) der Ziel-Domäne bzw. Ziel-Verteilung (3) gewählt werden (111b).

4. Verfahren (100) nach Anspruch 3, wobei Beispiel-Records (6), die keinem der Cluster angehören, als weitere Sub-Domäne bzw. Sub-Verteilung (3a) der Ziel-Domäne bzw. Ziel-Verteilung (3) gewählt werden (111c).

5. Verfahren (100) nach einem der Ansprüche 2 bis 4, wobei Sub-Domänen bzw.
Sub-Verteilungen (3a) gewählt werden (111d), deren Stile jeweils
• durch Unterschiede im Prozess der Aufnahme der Beispiel-Records (6) festgelegt sind, und/oder
• durch Stilmerkmale, die ein trainierter Merkmalsextraktor aus den Beispiel-Records (6) ermittelt hat, und/oder
• durch Unterschiede in statistischen Kenngrößen, und/oder in Frequenzdarstellungen, der Beispiel-Records (6) charakterisiert werden.

6. Verfahren (100) nach einem der Ansprüche 1 bis 5, wobei der Daten-Record (1) mindestens ein Bild umfasst (105) und Sub-Domänen bzw. Sub-Verteilungen (3a) von Bildern gewählt werden (112), die sich in
• für die Bildaufnahme verwendeten Kameras und/oder Zusatzgeräten, und/oder
• Tageszeiten bei der Bildaufnahme, und/oder
• Jahreszeiten bei der Bildaufnahme, und/oder
• Wetterverhältnissen bei der Bildaufnahme, und/oder
• Lichtverhältnissen bei der Bildaufnahme,
unterscheiden.

7. Verfahren (100) nach einem der Ansprüche 1 bis 6, wobei die Zwischenergebnisse (4) durch Linearkombination oder eine beliebige andere Aggregation zu dem gesuchten Ziel-Record (5) zusammengeführt werden (141).

8. Verfahren (100) nach einem der Ansprüche 1 bis 7, wobei die Zwischenergebnisse (4) mehrmals in unterschiedlicher Weise zusammengeführt werden (142), um so aus ein und demselben Daten-Record (1) mehrere unterschiedliche Ziel-Records (5) zu erzeugen.

9. Verfahren (100) nach einem der Ansprüche 1 bis 8, wobei ein synthetisch generierter Daten-Record (1), der eine selten auftretende und/oder kritische Situation eines technischen Systems repräsentiert, gewählt wird (106).

10. Verfahren (100) nach einem der Ansprüche 1 bis 9, wobei der Ziel-Record (5) als Trainings-Beispiel für ein Machine Learning-Modell (7) genutzt wird, indem
• dieser Ziel-Record (5) dem Machine Learning-Modell (7) zugeführt wird (150) und
• eine Abweichung der hierbei erhaltenen Ausgabe (7a) von einer erwarteten Ausgabe (7b) als Feedback für die Optimierung von Parametern, die das Verhalten des Machine Learning-Modells (7) charakterisieren, verwendet wird (160).

11. Verfahren (100) nach einem der Ansprüche 1 bis 10, wobei der Ziel-Record (5) als Test- oder Validierungs-Beispiel für ein trainiertes Machine Learning-Modell (7*) genutzt wird, indem
• der Ziel-Record (5) dem trainierten Machine Learning-Modell (7*) zugeführt wird (170) und
• eine Abweichung der hierbei erhaltenen Ausgabe (7a*) von einer erwarteten Ausgabe (7b) als Indikator für die Leistung des trainierten Machine Learning-Modells (7*) verwendet wird (180).

12. Verfahren (100) nach einem der Ansprüche 10 bis 11, wobei eine Soll-Ausgabe, mit der der für die Erzeugung des Ziel-Records (5) verwendete ursprüngliche Daten-Record gelabelt ist, als erwartete Ausgabe (7b) gewählt wird (161, 181).

13. Verfahren (100) nach einem der Ansprüche 10 bis 12, wobei
• dem trainierten Machine Learning-Modell (7*) Messdaten-Records (8) mit Messdaten zugeführt werden (190),
• aus der Ausgabe (7a*) des trainierten Machine Learning-Modells (7*) ein Ansteuersignal (200a) gebildet wird (200) und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (200a) angesteuert wird (210).

14. Computerprogramm, enthaltend maschinenlesbare Anweisungen, die, wenn sie auf einem oder mehreren Computern und/oder Compute-Instanzen ausgeführt werden, den oder die Computer dazu veranlassen, das Verfahren (100) nach einem der Ansprüche 1 bis 13 auszuführen.

15. Maschinenlesbarer Datenträger und/oder Downloadprodukt mit dem Computerprogramm nach Anspruch 14.

16. Ein oder mehrere Computer und/oder Compute-Instanzen mit dem Computerprogramm nach Anspruch 14, und/oder mit dem maschinenlesbaren Datenträger und/oder Downloadprodukt nach Anspruch 15.
